# EUROPÄISCHE PATENTANMELDUNG

(11) **EP 1 890 063 A1**
(43) Veröffentlichungstag der Anmeldung: **20.02.2008**
(21) Anmeldenummer: 07012982.0
(22) Anmeldetag: 03.07.2007
(51) Int. Cl.: F16K 31/08

(54) **Ventilanordnung mit Magnetabschirmung**

(30) Priorität: 18.08.2006 DE 102006038887
(71) Anmelder: Robert Bosch GmbH, 70184 Stuttgart (DE)
(72) Erfinder: Gaumnitz, Michael Dr., 72160 Horb (DE); Schempp, Roland, 71665 Vaihingen (DE); Schmitt, Joachim, 72160 Horb (DE); Nordt, Friedemann, 72184 Eutingen im Gäu (DE); Unger, Manfred, 63801 Kleinostheim (DE); Zorn, Alexander, 75391 Gechingen (DE); Hoppe, Stefan, 72172 Sulz am Neckar (DE)
(74) Vertreter: Thürer, Andreas

(57) **Zusammenfassung**

Offenbart ist eine Ventilanordnung mit einem Ventilgehäuse und zumindest einem Schließkörper, der von der Kraft zumindest eines Permanentmagneten in einer Richtung beaufschlagt ist, wobei der Schließkörper über mindestens einen Elektromagneten gegen die Kraft des Permanentmagneten bewegbar ist, so dass eine Druckmittelströmung von einem Druckmitteleingang zu einem Druckmittelausgang zu- oder aufsteuerbar ist. Erfindungsgemäß ist der Permanentmagnet außerhalb der Druckmittelströmung von dem Druckmitteleingang zu dem Druckmittelausgang angeordnet.

## Beschreibung

Die Erfindung betrifft eine Ventilanordnung gemäß dem Oberbegriff des Patentanspruchs 1.

Eine derartige Ventilanordnung ist beispielsweise aus der WO 03/052302 A2 bekannt. Diese herkömmliche Ventilanordnung für eine hydraulische Arbeitsmaschine, beispielsweise eine Hydropumpe oder einen Hydromotor, besteht im Wesentlichen aus einem Ventilgehäuse'und einem ringförmigen Schließkörper, der von der Kraft eines Permanentmagneten in einer Offenstellung gehalten ist, so dass eine Druckmittelströmung von einem Druckmitteleingang zu einem Druckmittelausgang bzw. von einem Druckmittelausgang zu einem Druckmitteleingang aufgesteuert ist. Der Schließkörper ist an einer Stirnseite mit Stiften versehen, die über Halterippen mit einem beweglich an dem Ventilgehäuse axial geführten, etwa ringförmigen Polstück verbunden sind, das zwischen dem Permanentmagneten und dem Elektromagneten angeordnet ist und mit diesen in Wirkverbindung steht. Das mit dem Schließkörper verbundene Polstück wird in einer Grundstellung durch den Permanentmagneten magnetisch angezogen, so dass der Schließkörper von dem Ventilsitz abgehoben ist und eine Druckmittelströmung von dem Druckmitteleingang zu dem Druckmittelausgang aufgesteuert ist. Der Schließkörper ist mittels eines Elektromagneten aus seiner Offenstellung gegen die Kraft einer Druckfeder in seine Schließstellung bringbar, so dass die Druckmittelströmung von dem Druckmitteleingang zu dem Druckmittelausgang zusteuerbar ist. Hierbei wird der Permanentmagnet durch das Magnetfeld des Elektromagneten im Wesentlichen entmagnetisiert, so dass das Polstück von dem Elektromagnet gegen die Kraft der Druckfeder angezogen und der Schließkörper in seine Schließstellung betätigt wird.

Nachteilig bei derartigen Ventilanordnungen ist, dass der Permanentmagnet im Betrieb der Ventilanordnung magnetisierbare Teilchen, beispielsweise Späne, Abrieb oder dergleichen, aus der Druckmittelströmung anzieht. Dadurch kann sich eisenmetallisches Material an dem Permanentmagneten ansammeln und die Funktion der Ventilanordnung bis hin zum Funktionsausfall beeinträchtigen. Auch die kurzzeitige Entmagnetisierung des Permanentmagneten während des Ventilschließvorgangs führt nicht zum Ablösen der angelagerten Partikel, da die Druckmittelströmung durch das Schließen des Ventils unterbrochen wird, so dass die anhaftenden Partikel nicht abtransportiert werden können.

Demgegenüber liegt der Erfindung die Aufgabe zugrunde, eine Ventilanordnung zu schaffen, bei der die Betriebssicherheit mit minimalem vorrichtungstechnischen Aufwand verbessert ist.

Diese Aufgabe wird durch eine Ventilanordnung mit den Merkmalen des Patentanspruchs 1 gelöst.

Die erfindungsgemäße Ventilanordnung hat ein Ventilgehäuse und zumindest einen Schließkörper, der von der Kraft zumindest eines Permanentmagneten in einer Richtung beaufschlagt ist, wobei der Schließkörper über mindestens einen Elektromagneten gegen die Kraft des Permanentmagneten bewegbar ist, so dass eine Druckmittelströmung von einem Druckmitteleingang zu einem Druckmittelausgang zu- bzw. aufsteuerbar ist. Erfindungsgemäß ist der Permanentmagnet außerhalb der Druckmittelströmung von dem Druckmitteleingang zu dem Druckmittelausgang angeordnet. Die erfindungsgemäße Lösung verhindert durch die Anordnung des Permanentmagneten außerhalb der Druckmittelströmung gegenüber dem Stand der Technik gemäß der WO 03/052302 A2, dass der Permanentmagnet im Betrieb der Ventilanordnung magnetisierbare Partikel aus der Druckmittelströmung anzieht, die sich an dem Permanentmagneten anlagern könnten. Dadurch wird eine Verschmutzung des Permanentmagneten durch magnetisierbare Partikel wirkungsvoll verhindert und eine dauerhafte Ventilfunktion sichergestellt.

Gemäß einem besonders bevorzugten Ausführungsbeispiel der Erfindung ist der Permanentmagnet durch zumindest eine Abschirmvorrichtung von der Druckmittelströmung abgeschirmt.

Die Abschirmvorrichtung ist vorzugsweise aus nichtmagnetischem Material ausgebildet, so dass ein dauerhaftes Anhaften von magnetisierbaren Partikeln an der Abschirmvorrichtung verhindert ist.

Als fertigungstechnisch besonders vorteilhaft hat es sich erwiesen, die Abschirmvorrichtung als zwischen dem Permanentmagnet und der Druckmittelströmung angeordneten Hohlzylinder auszubilden.

Vorzugsweise ist die Abschirmvorrichtung zwischen dem Elektromagnet und dem Permanentmagnet angeordnet und überdeckt diese zumindest abschnittsweise axial, so dass ein von der Druckmittelströmung abgeschirmter Innenraum ausgebildet ist, in dem der Permanentmagnet und der Elektromagnet angeordnet sind.

Der Innenraum ist bei einer bevorzugten Ausführung der Erfindung über zumindest einen Ringspalt mit dem Druck der Druckmittelströmung beaufschlagt, so dass ein ungewünschter Druckunterschied zwischen der Druckmittelströmung und dem Druckmittel in dem Innenraum verhindert ist. Der Permanentmagnet ist hierbei zwar von Druckmittel umgeben, liegt aber nicht in der Druckmittelströmung, so dass es aufgrund der begrenzten, quasi stationären Druckmittelmenge in dem Innenraum und der dadurch begrenzten Fremdkörpermenge ggf. lediglich zu einer sehr geringen, die Funktion der Ventilanordnung nicht beeinträchtigenden Ablagerung auf dem Permanentmagneten kommen kann.

Bei einem erfindungsgemäßen Ausführungsbeispiel ist die Abschirmvorrichtung beweglich mit dem Schließkörper ausgebildet. Hierbei wird es bevorzugt, wenn sich die Abschirmvorrichtung abschnittsweise in zumindest eine Ausnehmung des Ventilgehäuses erstreckt, die derart ausgebildet ist, dass der Permanentmagnet auch bei einer Axialverschiebung der Abschirmvorrichtung abgeschirmt ist. Dadurch wird mittels der Abschirmvorrichtung in jeder Ventilstellung eine Abschirmung des Permanentmagneten vor der das Ventil durchströmenden Druckmittelströmung erreicht.

Die Ausnehmung ist insbesondere derart in das Ventilgehäuse eingebracht, dass die Abschirmvorrichtung etwa bündig mit einer Umfangsfläche des Ventilgehäuses verläuft. Aufgrund der im Wesentlichen bündigen Ausbildung wird eine Beeinflussung der Druckmittelströmung durch den Permanentmagneten bzw. durch die Abschirmvorrichtung verringert, so dass durch die Abschirmvorrichtung eine Beruhigung der Druckmittelströmung erreicht wird.

Gemäß einem weiteren alternativen Ausführungsbeispiel der Erfindung ist der Permanentmagnet räumlich getrennt von der Druckmittelströmung in zumindest einem Aufnahmeraum angeordnet. Beispielsweise kann der Permanentmagnet mit dem Elektromagnet in einem gemeinsamen Aufnahmeraum angeordnet sein, der zwar mit Druckmittel gefüllt ist, aber nicht direkt der Druckmittelströmung von dem Druckmitteleingang zu dem Druckmittelausgang ausgesetzt ist.

Der Schließkörper ist vorzugsweise mit zumindest einem abschnittsweise zwischen dem Permanentmagneten und dem Elektromagneten angeordneten und mit diesen in Wirkverbindung stehenden Ankerteil verbunden. Bei einer Ausführung der Erfindung ist der Schließkörper, beispielsweise direkt oder durch den Ventilsitz hindurch, über zumindest ein Übertragungsglied, beispielsweise eine Achse, mit dem Ankerteil verbunden.

Bei einer besonders einfachen Lösung findet als Schließkörper ein Ring mit zumindest abschnittsweise kreisförmigem oder stromlinienförmigem Querschnitt Verwendung. Der Schließkörper ist vorzugsweise über zumindest ein Verbindungselement axial verschiebbar in dem Ventilgehäuse geführt. Beispielsweise ist der Schließkörper über Verbindungsrippen mit einer auf einem Führungsstift des Ventilgehäuses verschiebbar geführten Führungshülse verbunden.

Gemäß einer alternativen Ausführungsform der Erfindung wird zumindest ein kegel- oder kugelförmiger Schließkörper eingesetzt.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 eine Teilansicht eines Längsschnittes durch eine erfindungsgemäße Ventilanordnung mit Abschirmvorrichtung und
Figur 2 eine Teilansicht eines Längsschnittes durch eine erfindungsgemäße Ventilanordnung gemäß einem weiteren Ausführungsbeispiel.

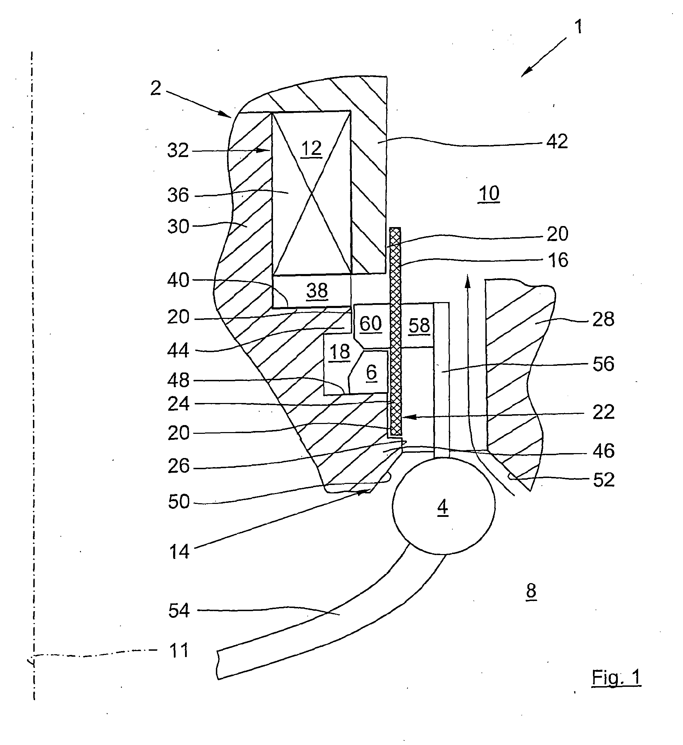

Figur 1 zeigt eine als Saugventil ausgebildete erfindungsgemäße Ventilanordnung 1 für eine nicht dargestellte hydraulische Arbeitsmaschine, beispielsweise für eine Hydropumpe oder einen Hydromotor. Die Ventilanordnung 1 besteht im Wesentlichen aus einem Ventilgehäuse 2 und einem Schließkörper 4, der von der Kraft eines Permanentmagneten 6 in der dargestellten Offenstellung gehalten ist, so dass eine Druckmittelströmung (siehe Pfeilrichtung) von einem Druckmitteleingang 8 zu einem Druckmittelausgang 10 bzw. in umgekehrter Richtung aufgesteuert ist. Die Ventilanordnung 1 ist um eine schematisch angedeutete Längsachse 11 rotationssymmetrisch ausgebildet. Der Schließkörper 4 ist über einen Elektromagneten 12 aus seiner Offenstellung in seine Schließstellung bringbar, wobei er auf einem Ventilsitz 14 aufsitzt, so dass die Druckmittelströmung von dem Druckmitteleingang 8 zu dem Druckmittelausgang 10 zugesteuert ist. Das Ventilgehäuse 2 ist mehrteilig ausgebildet und besteht im Wesentlichen aus einem etwa zylinderförmigen, in einem hülsenförmigen Gehäuseaußenteil 28 angeordneten Ventilgrundkörper 30, der an einem stufenförmigen Endabschnitt 32 eine Magnetspule 36 des Elektromagneten 12 trägt. Die Magnetspule 36 ist über eine Hülse 38 an einer Stufenfläche 40 des Ventilgrundkörpers 30 abgestützt und mittels eines auf den Ventilgrundkörper 30 befestigten Polstücks 42 an diesem fixiert. Der Ventilgrundkörper 30 hat weiterhin zwei axial beabstandete Vorsprünge 44, 46. Auf dem in Figur 1 unteren Vorsprung 46 ist auf einer Stützfläche 48 der etwa ringförmig ausgebildete Permanentmagnet 6 fixiert und auf einer der Stützfläche 48 gegenüberliegenden Seite des Vorsprungs 46 ein etwa ringförmiger innerer Ventilsitzteil 50 des Ventilsitzes 14 ausgebildet. Der Grundkörper 30 ist über nicht dargestellte Halterippen mittig in dem Gehäuseaußenteil 28 befestigt, wobei das äußere Gehäuseteil 28 an seiner Innenseite derart ausgebildet ist, dass es einen gegenüber dem ersten Ventilsitzteil 50 radial außenliegenden, zweiten Ventilsitzteil 52 des Ventilsitzes 14 ausbildet, so dass zwischen dem ersten und dem zweiten Ventilsitzteil 50, 52 ein etwa ringförmig Druckmittelkanal ausgebildet ist. Der Schließkörper 4 ist bei dem dargestellten Ausführungsbeispiel entsprechend dem Ventilsitz 14 als Ring mit im Wesentlichen kreisförmigen Querschnitt ausgebildet, der an einer Unterseite über eine Vielzahl von etwa bogenförmigen Stützrippen 54 mit einer nicht dargestellten Führungshülse verbunden ist, die auf einem an der Unterseite des Ventilgrundkörpers 30 etwa mittig angeordneten Führungsstift (nicht dargestellt) axial verschiebbar geführt ist. Auf dem Führungsstift ist zwischen der Unterseite des Grundkörpers 30 und der Führungshülse eine nicht dargestellte Druckfeder angeordnet, die den Schließkörper 4 neben der Kraft des Permanentmagneten 6 in seine dargestellte Offenstellung vorspannt. Der Schließkörper 4 ist an einer Stirnseite mit einem als Ring 56 ausgebildeten Übertragungsglied versehen, der sich durch den Ventilsitz 14 hindurch erstreckt und über eine Verbindungsrippe 58 mit einem beweglichen, etwa ringförmigen Ankerteil 60 verbunden ist, das zwischen dem Permanentmagneten 6 und dem Elektromagneten 12 angeordnet ist und mit diesen in Wirkverbindung steht. Der Permanentmagnet 6 ist außerhalb der Druckmittelströmung angeordnet, so dass dieser im Betrieb der Ventilanordnung 1 keine magnetisierbaren Teilchen, beispielsweise Späne, Abrieb oder dergleichen, aus der Druckmittelströmung anziehen kann. Dadurch wird eine Verschmutzung des Permanentmagneten 6 durch magnetisierbare Partikel wirkungsvoll verhindert und eine dauerhafte Ventilfunktion sichergestellt.

Gemäß dem dargestellten Ausführungsbeispiel ist der Permanentmagnet 6 hierzu durch eine Abschirmvorrichtung 16 von der Druckmittelströmung abgeschirmt, die als zwischen dem Permanentmagnet 6 und der Druckmittelströmung angeordneter Hohlzylinder 16 aus nichtmagnetischem Material ausgebildet ist, so dass ein dauerhaftes Anhaften von magnetisierbaren Partikeln an diesem verhindert ist. Die Abschirmvorrichtung 16 ist bei dem dargestellten Ausführungsbeispiel zwischen dem Ankerteil 60 und der Verbindungsrippe 58 befestigt und überdeckt den Elektromagnet 12 und den Permanentmagnet 6 abschnittsweise axial, so dass ein von der Druckmittelströmung abgeschirmter Innenraum 18 ausgebildet ist, in dem der Permanentmagnet 6 und der Elektromagnet 12 angeordnet sind. Der Innenraum 18 ist über Ringspalte 20 mit dem Druck der Druckmittelströmung beaufschlagt, so dass ein ungewünschter Druckunterschied zwischen der Druckmittelströmung und dem Druckmittel in dem Innenraum 18 verhindert ist. Der Permanentmagnet 6 ist über die Ringspalte 20 zwar vom Druckmittel umgeben, aber nicht von der Druckmittelströmung, so dass es aufgrund der geringen in dem Innenraum 18 quasi stationär vorhandenen Druckmittelmenge und der dadurch begrenzten Fremdkörpermenge allenfalls zu einer sehr geringe Ablagerung auf dem Permanentmagneten 6 kommt, die die Funktion der Ventilanordnung 1 nicht beeinträchtigt. Die Abschirmvorrichtung 16 ist bei dem dargestellten Ausführungsbeispiel beweglich mit dem Schließkörper 4 ausgebildet und erstreckt sich mit einem Endabschnitt 22 in eine stufenförmige Ausnehmung 24 des Ventilgehäuses 2, die derart ausgebildet ist, dass der Innenraum 18 auch bei einer Axialverschiebung der Abschirmvorrichtung 16 mit dem Schließkörper 4 abgeschirmt ist. Dadurch wird auch bei geschlossener Ventilstellung eine Abschirmung des Permanentmagneten 6 von der die Ventilanordnung 1 durchströmenden Druckmittelströmung erreicht. Die Ausnehmung 24 ist derart in das Ventilgehäuse 2 eingebracht, dass die Abschirmvorrichtung 16 etwa bündig mit einer Umfangsfläche 26 des Ventilgehäuses 2 verläuft. Aufgrund der im Wesentlichen bündigen Ausbildung wird eine Beeinflussung der Druckmittelströmung durch den Permanentmagneten 6 bzw. die Abschirmvorrichtung 16 verringert, so dass durch die Abschirmvorrichtung 16 eine Beruhigung der Druckmittelströmung erreicht wird.

Das mit dem Schließkörper 4 verbundene Ankerteil 60 wird durch den Permanentmagneten 6 magnetisch angezogen, so dass der Schließkörper 4 von dem Ventilsitz 14 abgehoben ist und sich in seiner dargestellten Offenstellung befindet in der die Druckmittelströmung von dem Druckmitteleingang 8 zu dem Druckmittelausgang 10 aufgesteuert ist. Zum Schließen der Ventilanordnung 1 wird der Elektromagnet 12 bestromt. Hierbei wird der Permanentmagnet 6 durch das Magnetfeld des Elektromagneten 12 im Wesentlichen entmagnetisiert, so dass das Ankerteil 60 von dem Elektromagnet 12 gegen die Kraft der Druckfeder angezogen und der Schließkörper 4 in seine Schließstellung betätigt wird, in der die Druckmittelverbindung von dem Druckmitteleingang 8 zu dem Druckmittelausgang 10 zugesteuert ist.

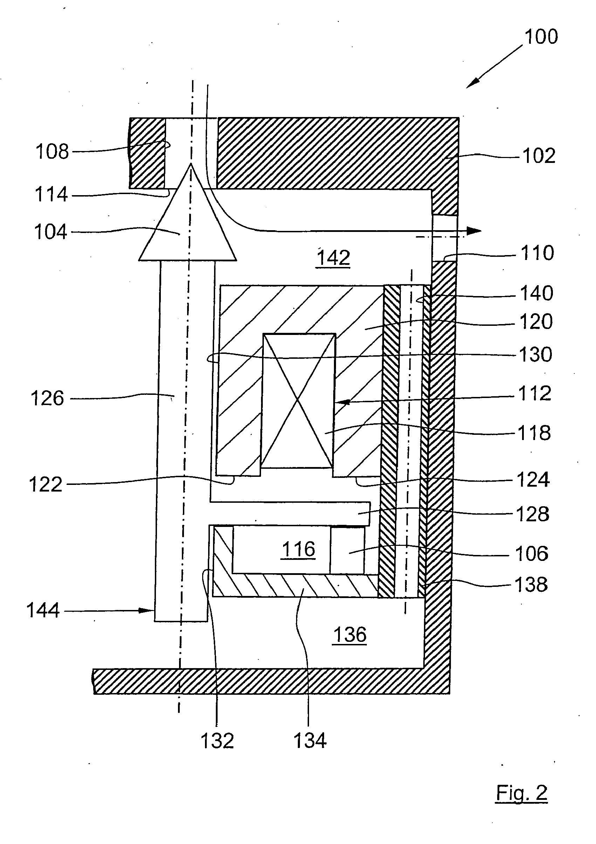

Gemäß Figur 2, die eine Teilansicht eines Längsschnittes durch eine erfindungsgemäße Ventilanordnung 100 gemäß einem weiteren Ausführungsbeispiel zeigt, hat die Ventilanordnung 100 ein Ventilgehäuse 102 und einen Schließkörper 104, der von der Kraft eines Permanentmagneten 106 in seiner Offenstellung gehalten ist, wobei der Schließkörper 104 über einen Elektromagneten 112 aus seiner Offenstellung gegen einen Ventilsitz 114 betätigbar und in seine Schließstellung bringbar ist, so dass eine Druckmittelströmung (siehe Pfeilrichtung) von einer Druckmitteleingangsbohrung 108 zu einer Druckmittelausgangsbohrung 110 zusteuerbar ist. Die Magnetspule 118 des Elektromagneten 112 ist von einem Eisenpolstück 120 mit etwa U-förmigem Querschnitt abschnittsweise umgriffen, das zwei dem Permanentmagneten 106 zugewandte Polflächen 122, 124 aufweist. Der Schließkörper 104 ist als Kegel ausgebildet, der über eine als Übertragungsglied vorgesehene, die Längsachse der Ventilanordnung 100 ausbildende Achse 126 mit einem abschnittsweise zwischen dem Permanentmagneten 106 und dem Elektromagneten 112 angeordneten und mit diesen in Wirkverbindung stehenden Ankerteil 128 verbunden ist. Die Achse 126 ist in jeweils einer Aufnahmebohrung 130, 132 des Eisenpolstücks 120 bzw. eines den Permanentmagneten 106 tragenden Rückschlussteils 134 geführt und erstreckt sich in der gezeigten Grundstellung der Ventilanordnung 100 aus der Aufnahmebohrung 132 heraus in einen Innenraum 136 des Ventilgehäuses 102 hinein.

Der Permanentmagnet 106 ist bei dieser erfindungsgemäßen Variante räumlich getrennt von der Druckmittelströmung in einem Aufnahmeraum 116 angeordnet. Dadurch wird eine Verschmutzung des Permanentmagneten 106 durch magnetisierbare Partikel wirkungsvoll verhindert und eine dauerhafte Ventilfunktion sichergestellt. In der dargestellten Grundstellung der Ventilanordnung 100 wird das Ankerteil 128 von der Kraft des Permanentmagneten 106 an diesem in Anlage gehalten. Das Eisenpolstück 120 und das Rückschlussteil 134 sind von einer Stützhülse 138 umgriffen und gegenüber der Druckmittelströmung abgedichtet in dem Ventilgehäuse 102 fixiert. Die Stützhülse 138 ist von einer Durchgangsbohrung 140 durchsetzt, die einen dem Schließkegel 104 zugewandten Druckmittelkanal 142 mit dem einen Endabschnitt 144 der Achse 126 zugewandten Innenraum 136 verbindet. Aufgrund der Verbindung zwischen dem Innenraum 136 und dem Druckmittelkanal 142 kann bei einem Ankerhub Druckmittel aus dem Innenraum 136 in den Druckmittelstrom strömen bzw. umgekehrt, so dass lediglich durch thermische Änderungen Druckmittel aus dem Aufnahmeraum 116 ausgetauscht wird. Dieser minimale Druckmittelaustausch kann ggf. zu einem minimalen Schmutzeintrag führen, so dass es lediglich zu einer sehr geringen Ablagerung auf dem Permanentmagneten kommt, die die Funktion der Ventilanordnung 100 nicht beeinträchtigt. Der Aufnahmeraum 116 füllt sich beim ersten Betrieb der Ventilanordnung 100 mit Druckmittel, das im Wesentlichen in dem Aufnahmeraum 116 verbleibt.

Zum Schließen der Ventilanordnung 100 wird der Elektromagnet 112 bestromt. Bei Erregung des Elektromagneten 112 wird das Ankerteil 128 an die beiden Polflächen 122, 124 des Eisenpolstücks 120 gezogen,- so dass der Schließkörper 104 über die in den Bohrungen 130, 132 geführte Achse 126 aus seiner dargestellten Offenstellung gegen den Ventilsitz 114 in seine Schließstellung gebracht wird und die Druckmittelverbindung von der Druckmitteleingangsbohrung 108 zu der Druckmittelausgangsbohrung 110 zugesteuert ist. Hierbei wird der Permanentmagnet 106 durch das Magnetfeld des Elektromagneten 112 im Wesentlichen entmagnetisiert.

Die erfindungsgemäße Ventilanordnung 1, 100 ist nicht auf die beschriebenen ringförmigen oder kegelförmigen Schließkörper beschränkt, vielmehr kann praktisch jedes aus dem Stand der Technik bekannte Schließelement, insbesondere ein kugelförmiger Schließkörper, Verwendung finden. Des Weiteren ist die Erfindung nicht auf die dargestellten Ventilbauformen beschränkt, vielmehr ist die Erfindung bei unterschiedlichen Ventiltypen einsetzbar.

Offenbart ist eine Ventilanordnung 1, 100 mit einem Ventilgehäuse 2, 102 und zumindest einem Schließkörper 4, 104, der von der Kraft zumindest eines Permanentmagneten 6, 106 in einer Richtung beaufschlagt ist, wobei der Schließkörper 4, 104 über mindestens einen Elektromagneten 12, 112 gegen die Kraft des Permanentmagneten 6, 106 bewegbar ist, so dass eine Druckmittelströmung von einem Druckmitteleingang 8, 108 zu einem Druckmittelausgang 10, 110 zu- oder aufsteuerbar ist. Erfindungsgemäß ist der Permanentmagnet 6, 106 außerhalb der Druckmittelströmung von dem Druckmitteleingang 8, 108 zu dem Druckmittelausgang 10, 110 angeordnet.

## Patentansprüche

1. Ventilanordnung mit einem Ventilgehäuse (2, 102) und zumindest einem Schließkörper (4, 104), der von der Kraft zumindest eines Permanentmagneten (6, 106) in einer Richtung beaufschlagt ist, wobei der Schließkörper (4, 104) über mindestens einen Elektromagneten (12, 112) gegen die Kraft des Permanentmagneten (6, 106) bewegbar ist, so dass eine Druckmittelströmung von einem Druckmitteleingang (8, 108) zu einem Druckmittelausgang (10, 110) zu- oder aufsteuerbar ist, **dadurch gekennzeichnet, dass** der Permanentmagnet (6, 106) außerhalb der Druckmittelströmung von dem Druckmitteleingang (8, 108) zu dem Druckmittelausgang (10, 110) angeordnet ist.

2. Ventilanordnung nach Anspruch 1, wobei der Permanentmagnet (6) durch zumindest eine Abschirmvorrichtung (16) von der Druckmittelströmung abgeschirmt ist.

3. Ventilanordnung nach Anspruch 2, wobei die Abschirmvorrichtung (16) aus nichtmagnetischem Material ausgebildet ist.

4. Ventilanordnung nach Anspruch 2 oder 3, wobei die Abschirmvorrichtung (16) ein zwischen dem Permanentmagnet (6) und der Druckmittelströmung angeordneter Hohlzylinder ist.

5. Ventilanordnung nach einem der Ansprüche 2 bis 4, wobei die Abschirmvorrichtung (16) zwischen dem Elektromagnet (12) und dem Permanentmagnet (6) angeordnet ist und diese zumindest abschnittsweise derart axial überdeckt, dass ein von der Druckmittelströmung abgeschirmter Innenraum (18) ausgebildet ist, in dem der Permanentmagnet (6) und der Elektromagnet (12) angeordnet sind.

6. Ventilanordnung nach Anspruch 5, wobei der Innenraum (18) über zumindest einen Ringspalt (20) mit dem Druck der Druckmittelströmung beaufschlagt ist.

7. Ventilanordnung nach einem der vorhergehenden Ansprüche, wobei die Abschirmvorrichtung (16) beweglich mit dem Schließkörper (4) ausgebildet ist.

8. Ventilanordnung nach Anspruch 7, wobei sich die Abschirmvorrichtung (16) abschnittsweise in zumindest eine Ausnehmung (24) des Ventilgehäuses (2) erstreckt, die derart ausgebildet ist, dass der Permanentmagnet (6) auch bei einer Axialverschiebung der Abschirmvorrichtung (16) mit dem Schließkörper (4) abgeschirmt ist.

9. Ventilanordnung nach Anspruch 8, wobei die Ausnehmung (24) derart in das Ventilgehäuse (2) eingebracht ist, dass die Abschirmvorrichtung (16) etwa bündig mit einer Umfangsfläche (26) des Ventilgehäuses (2) verläuft.

10. Ventilanordnung nach Anspruch 1, wobei der Permanentmagnet (106) räumlich getrennt von der Druckmittelströmung in zumindest einem Aufnahmeraum (116) angeordnet ist.

11. Ventilanordnung nach einem der vorhergehenden Ansprüche, wobei der Schließkörper (4, 104) mit zumindest einem abschnittsweise zwischen dem Permanentmagneten (6, 106) und dem Elektromagneten (12, 112) angeordneten und mit diesen in Wirkverbindung stehenden Ankerteil (60, 128) verbunden ist.

12. Ventilanordnung nach Anspruch 11, wobei der Schließkörper (4, 104) über zumindest ein Übertragungsglied (56, 126), insbesondere über einen Ring oder eine Achse, mit dem Ankerteil (60, 128) verbunden ist.

13. Ventilanordnung nach einem der vorhergehenden Ansprüche, wobei der Schließkörper (4) ein Ring mit zumindest abschnittsweise kreisförmigem oder stromlinienförmigem Querschnitt ist.

14. Ventilanordnung nach einem der vorhergehenden Ansprüche, wobei der Schließkörper (4) über zumindest ein Verbindungselement (54) axial verschiebbar in dem Ventilgehäuse (2) geführt ist.

15. Ventilanordnung nach einem der Ansprüche 1 bis 12, wobei der Schließkörper (104) zumindest einen Kegel und/oder eine Kugel aufweist.
